Europäisches Patentamt

European Patent Office

Office européen des brevets

(19)

(11) Publication number: **0 156 271**

A1

# EUROPEAN PATENT APPLICATION

(12)

(21) Application number: **85103045.2**

(22) Date of filing: **16.03.85**

(51) Int. Cl.⁴: **G 01 F 1/00**
**G 01 F 15/00, G 01 F 1/48**

(30) Priority: **19.03.84 US 590673**

(43) Date of publication of application:
**02.10.85 Bulletin 85/40**

(84) Designated Contracting States:
**DE FR GB IT NL**

(71) Applicant: **HONEYWELL INC.**
**Honeywell Plaza**
**Minneapolis Minnesota 55408(US)**

(72) Inventor: **Bohrer, Philip J.**
**2604 West 55th Street**
**Minneapolis Minn. 55410(US)**

(72) Inventor: **Johnson, Timothy L.**
**16417 North Temple Drive**
**Minnetonka Minn. 55345(US)**

(72) Inventor: **Higashi, Robert E.**
**10.000 Nicollet Avenue South, 212**
**Bloomington Minn. 55420(US)**

(72) Inventor: **Satren, Ernest A.**
**1207 East 92nd Street**
**Bloomington Minn. 55420(US)**

(74) Representative: **Rentzsch, Heinz et al,**
**Honeywell Europe S.A. Holding KG Patent- und**
**Lizenzabteilung Kaiserleistrasse 55**
**D-6050 Offenbach am Main(DE)**

(54) Condition responsive sensing apparatus.

(57) A condition responsive apparatus is provided with a sensor channel (20) that is interconnected to a capillary tube restriction (41) which can be readily interchanged on the device to change the response of a condition responsive sensor (30). A very small sensor (30) is placed in the sensor channel (20). The sensor channel (20) and the capillary tube (41) can be placed generally parallel to one another to reduce the overall length of the apparatus.

FIG. 2

HONEYWELL INC.

Honeywell Plaza

Minneapolis, Minn. USA

March 13, 1985

B2010802 EP

HR/ep

Condition Responsive Sensing Apparatus

The invention relates to a condition responsive sensing apparatus of the type as described in the general portion of claim 1. In recent years miniature electronic types of condition sensors, in particular flow sensors, have been developed which are very sensitive and are exceedingly small. They can be manufactured by processes comparable to the manufacture of integrated circuits. This allows for the very small size, and the mass production of very inexpensive sensor elements. These units typically have been used in customized condition responsive sensors, such as pressure, temperature or flow sensing applications, where each sensor structure was individually manufactured for a particular application.

In order to utilize the recently mass-produced, miniature sensor, it is the object to disclose a small, and mass-producible housing which can be used for different applications of the sensor. This is achieved by the invention as characterized in claim 1. According to the invention, a substantial portion of the housing is of uniform structure, but the housing can be modified in a simple manner to make the condition responsive apparatus applicable to numerous different types of sensing problems.

The present invention is accomplished by providing a housing that has a generally rectangular fluid flow channel. The channel can, however, be of any shape cross-section. In case of a flow sensing apparatus the channel has mounted within it a miniature flow sensor. The channel is then adapted to be connected to a capillary tube that acts as a restriction. The capillary tube allows for a

- 2 -

0156271

highly controlled rate of flow through the device for a
particular application, and the less restrictive series
connected flow channel in which the sensor is mounted provides for a practical sensing device. The present device
is capable of providing a practical means for converting
a small differential pressure (in the order of 0,025 to
250 mm of water column) to a well-controlled, low flow
rate. This low flow rate is then directed across the miniature sensor in a reliable manner. Thus, an electrical
output from the flow sensor can be derived that corresponds
to the flow rate through the device. The device can be
calibrated in terms of a differential pressure, or in terms
of flow rate through the device.

In accordance with the present invention there is provided
a condition responsive sensor adapted to be connected
across a source of fluid pressure differential, including:
body means and base means with said means defining a sensor channel; said sensor channel including a first port
and a sensor mounted in said sensor channel. Said body
means and said base means define reentrant flow channel
connected to said sensor channel remote from said first
port. A capillary tube restriction having a first end
thereof sealed in a fluid tight relationship to said reentrant flow channel; and a second end of said capillary
tube sealed at a second port to form a complete fluid
flow passage through said condition responsive apparatus.
By inserting differently sized capillary tubes, the sensing
apparatus can be adapted to different sensing conditions
such as flow rate or differential pressure.

Preferred embodiments and details of the invention are described in the subclaims. The invention will now be described in detail with reference to two embodiments shown
in the attached drawings. Therein

Figure 1  is a top view of a first embodiment of a condition responsive sensing apparatus;

Figure 2 is a cross-section of Figure 1 along lines 2-2;

Figure 3 is a cross-section of the device of Figure 2 along lines 3-3, and;

Figure 4 is a top view of a second embodiment of a condition responsive apparatus.

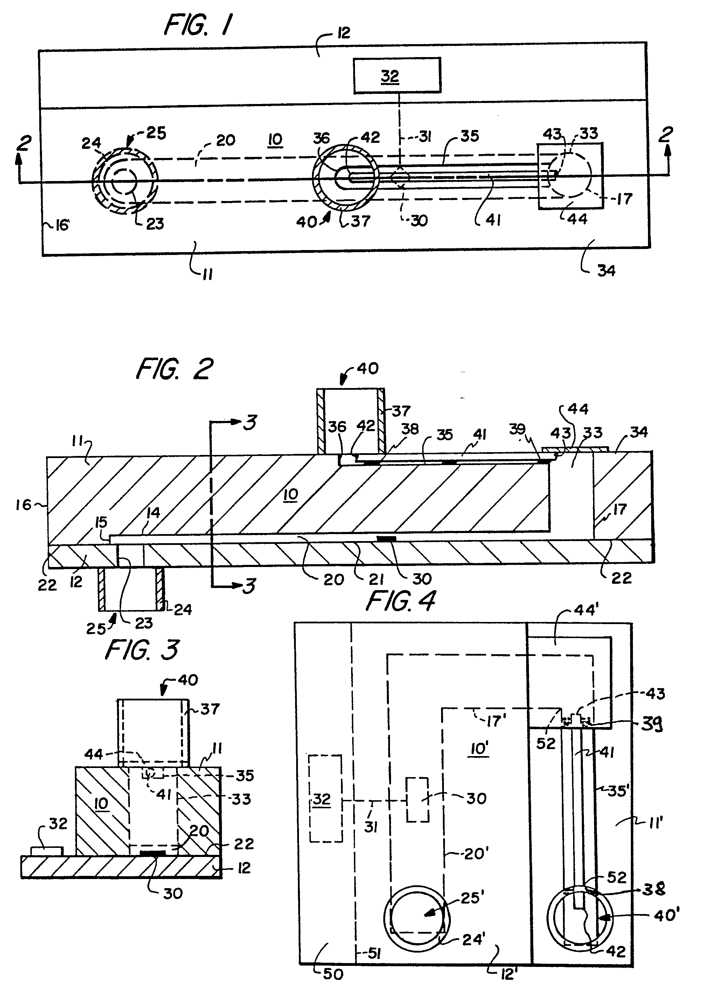

In Figures 1, 2, and 3 there are disclosed three views of a condition responsive sensing apparatus 10. The apparatus has a body means 11 and a base means 12. The body means 11 could be conveniently constructed from a block of nonconductive material, such as plastic. The base means 12 can by any type of flat member, and in the present disclosure typically would be part of a printed wiring board. The body means 11 contains a rectangular recess 14 that extends from a point 15 near an end 16 of the sensing apparatus to a second end 17. The rectangular channel 14 forms three walls of a sensor channel 20. The fourth wall of the sensor channel 20 is provided by the surface 21 of the base means 12. The body means 11 and the base means 12 are joined at a common surface 22 by any convenient technique such as a cement or could be mechanically held together by screws, rivets, etc.

Near the end 16 of the body means 11 is an opening 23 in the base means 12. The opening 23 typically would be a hole which was near the end 15 of the sensor channel 20. Encircling the hole 23 is a tube 24 that acts as an input-output port for the device. The hole 23 and the tube 24 provide generally a first port 25 for the device.

Mounted on the surface 21 of the sensor channel means 20 is a flow sensor 30. The flow sensor 30 is a miniature fluid flow sensing element and could be manufactured by various known technologies. The present device envisions that the flow sensor 30 would be a device integrated in a manner silimar to an integrated circuit in a silicon substrate.

Since the flow sensor 30 is mounted on the base means 12, which could be a printed wiring board, it can be connected by printed wiring connections 31 to an electronic package or module 32. The electronic package 32 provides an electrical output signal from the flow sensor 30 and is of conventional design. It is handy to mount the electronic package 32 on the base means or printed wiring board 12, and to utilize printed wiring techniques for the connections 31 to in turn manufacture a basic part of the condition responsive apparatus 10 as a compact device.

The sensor channel 20 is terminated at a hole 33 that acts as a reentrant flow channel to connect the sensor channel 20 to a second side 34 of the body means 11. The second side 34 of the body menas 11 has a recess 35 cut into it between the reentrant flow channel 33 and an end 36 which is encircled by a tube or pipe 37. The end 36 of the recess 35 and the pipe 37 form a second port 40 for the condition responsive apparatus 10.

The condition responsive apparatus is completed by the insertion of a capillary tube restriction 41 which is a short length of capillary or small diameter piping. The capillary tube restriction 41 has an end 42 that is sealed at 38 within the second port 40, and a second end 43 that is sealed at 39 under a plate 44 that covers the reentrant flow channel 33.

With the device disclosed in Figures 1, 2 and 3 a condition responsive apparatus has been disclosed which is capable of being connected across a source of fluid pressure by the first port 25 and the second port 40 so that the fluid will flow between these ports. The particular direction is not critical, and the present device can be used as a differential flow responsive element. It will be understood that a flow is restricted by the capillary tube restriction 41 so that the amount of fluid flow is limited. The limited flow is coupled by the reentrant flow channel 33 to the sensor channel 20 where the flow occurs over the flow sensor 30. This flow is distributed in a relatively large cross-sectional area of the sensor channel 20.

The present device is capable of being manufactured in mass with only the capillary tube restriction 41 requiring selection for the application of the particular device to different fluid pressures and fluid elements. The capillary tube restriction 41 can be readily selected in size so as to adjust the condition responsive apparatus 10 to different applications. Also, the present device utilizes a U-shaped configuration of the flow channel together with the capillary tube restriction 41, thereby reducing the total length of this device so that it has the ability to be applied in numerous applications where physical size must be limited.

Figures 1, 2 and 3 show the sensor channel and the capillary tube restriction on opposite sides of the body means 11. This configuration provides the U-shaped, compact arrangement. The sensor channel and capillary tube could also be physically positioned in series rather than in parallel, although this would result in a longer device. Any physical configuration will suffice, as long as the fluid connection is serial. In Figure 4 this same compact arrangement is accomplished by placing the sensor channel and the capillary tube restriction on the same side of the body means. Figure 4 will be explained in detail utilizing reference numbers that are selected for correspondence with Figures 1, 2 and 3.

In Figure 4 the apparatus 10' has a body means 11' and a base means 12'. A first port 25' is provided with a tube 24' connected to a rectangularly formed sensor channel 20'. The sensor channel 20' is formed into the body means 11' and/or the base means 12' in any convenient manner. The body means 11' and the base means 12' are again cemented together or clamped together by any convenient means. A flow sensor 30 is placed in the sensor channel 20' and is connected by circuitry 31 to an electronic package 32 that is mounted on the base means 12' in an area 50 that is shown over-hanging an edge 51 of the base means 11'.

The sensor channel 20' is connected to a reentrant flow channel 17' that in turn is covered by a plate 44'. The reentrant flow channel 17' connects at 52 to a first end 43 of a capillary tube restriction 41 which again is placed in a recess 35'. The recess 35' is terminated at a second port 40' where a second end 42 of the capillary tube restriction 41 is disclosed. The end 42 of the capillary tube restriction 41 is sealed at 52 so that the second port 40' along with the recess 35' and the end 42 of the capillary tube restriction 41 is fluid tight.

In the device disclosed in Figure 4 all of the fluid paths are on the same side of the apparatus and are again interconnected in a U-shaped configuration to save overall length of the device. The capillary tube restriction 41 can be conveniently selected with this structure to match the particular application, as was done with the device disclosed in Figures 1, 2, and 3.

As it can be seen, the specific physical structure of the body means and base means utilizing the sensor channel, and the capillary tube restriction can be altered to provide different configurations that are still within the scope of the invention. The invention can be used in connection with different types of miniaturized sensor elements, preferably single chip integrated sensors which may be responsive to fluid flow, pressure, temperature, oxygen content or any other physical, chemical or biological condition of a fluid under measurement.

Claims:

1. A condition responsive sensing apparatus including a condition responsive sensor (30) provided within a flow channel (25, 23, 20, 17, 33, 41, 36, 40) which is adapted to be connected to a source of fluid pressure differential, c h a r a c t e r i z e d   b y   an exchangeable flow restriction (41) forming part of the flow channel, said flow restriction having a small cross-section compared with the cross-section of that part (20) of the flow channel in which the sensor is located.

2. Apparatus according to claim 1, c h a r a c t e r - i z e d   i n   t h a t   the flow restriction (41) is a capillary tube which at both ends (42, 43) is in sealed (38, 39) fluid connection with the adjacent portions (36, 33) of the flow channel.

3. Apparatus according to claim 2, c h a r a c t e r - i z e d   i n   t h a t   the capillary tube (41) and the sensor portion (20) of the flow channel extend in parallel on a body plate (11) of the apparatus with an intermediate channel portion (33, 17') interconnecting the capillary tube (41) and said sensor portion (20).

4. Apparatus according to claim 3, c h a r a c t e r - i z e d   i n   t h a t   the intermediate channel portion (33, 17') extends rectangularly with respect to the capillary tube (41) and with respect to the sensor portion (20) therewith forming a  U-shaped flow channel (20, 17, 33, 41).

5. Apparatus according to claim 3 or 4, c h a r a c t e r - i z e d   i n   t h a t   the capillary tube (41) is located in a first recess (35) provided in a surface of a body plate (11) of the apparatus, and the sensor portion (20) of the flow channel is formed by a second recess (14) provided in a surface of the body plate (11) which second recess is covered by a base plate (12) supporting the sensor (30).

6. Apparatus according to claim 5, c h a r a c t e r - i z e d   i n   t h a t   the capillary tube (41) and the sensor portion (20) of the flow channel are provided on opposite sides (34, 22) of the body plate (11) and are interconnected by a  hole (33) through said body plate (11), whereat the base plate (12) simultaneously covers one end (17) of the hole (33) connected to the sensor portion (20) of the flow channel (Figures 1 to 3).

7. Apparatus according to claim 5, c h a r a c t e r - i z e d   i n   t h a t   the capillary tube (41) and the sensor portion (20') of the flow channel are provided on the same surface of the body plate (11') and are interconnected by a third recess (17') provided in the same surface of the body plate (11), whereat the base plate (12) simultaneously covers at least part of the third recess (17') (Figure 4).

8. Apparatus according to claim 6 or 7, c h a r a c t e r - i z e d   i n   t h a t   the recess portion connecting the second recess (35, 35') to the intermediate channel (33, 17') is covered by a cover plate (44, 44') and the second recess for fluid tight connection of the capillary tube to the intermediate channel is closed by first sealing means (39) also covered by said cover plate (44, 44').

9. Apparatus according to one of the claims 5 to 8, c h a r a c t e r i z e d   i n   t h a t   the base plate (12, 12') consists of an electrically insulating material and carries a microchip condition sensor, preferably a flow sensor (30) and printed wires (31) connecting said sensor chip to an electronic circuit module (32) also provided on said base plate (12, 12').

10. Apparatus according to one of the claims 5 to 9, c h a r a c t e r i z e d   i n   t h a t   the base plate (12, 12') has a hole (23) for connecting one end (15) of the sensor portion (20, 20') of the flow channel to a first connector tube (24, 24') and the body plate (11, 11') carries a second connector tube (37) connected to one end (42) of the capillary tube (41); both said ends being remote from said intermediate channel portion (33) and both connector tubes (24, 24'; 37) being adapted to be connected to the source of fluid pressure differential.

11. Apparatus according to claim 10, c h a r a c t e r - i z e d   b y   second sealing means (38, 52) providing a fluid tight seal around the capillary tube (41) between the first recess (35) and the second connector tube (37).

FIG. 1

FIG. 2

FIG. 3

FIG. 4

## EUROPEAN SEARCH REPORT

| | DOCUMENTS CONSIDERED TO BE RELEVANT | | EP 85103045.2 |
|---|---|---|---|

<table>
<tr><th>Category</th><th>Citation of document with indication, where appropriate, of relevant passages</th><th>Relevant to claim</th><th>CLASSIFICATION OF THE APPLICATION (Int. Cl 4)</th></tr>
<tr><td>P,X</td><td><u>EP - A1 - 0 104 004</u> (GRANT)<br>(28.03.1984)<br>* Fig. 2 *<br>& AU-A1-18 063/83 (15.03.1984)<br>--</td><td>1</td><td rowspan="3">G 01 F 1/00<br><br>G 01 F 15/00<br><br>G 01 F 1/48</td></tr>
<tr><td>X</td><td><u>GB - A - 2 024 668</u> (DANIEL INDUSTRIES)<br>* Fig. 1,2; abstract *<br>--</td><td>1</td></tr>
<tr><td>A</td><td><u>US - A - 3 851 526</u> (DREXEL)<br>* Fig. 2; column 4, paragraph 2 *<br>----</td><td>1,2</td></tr>
</table>

| TECHNICAL FIELDS SEARCHED (Int Cl 4) |
|---|
| G 01 F 1/00<br><br>G 01 F 15/00 |

The present search report has been drawn up for all claims

| Place of search | Date of completion of the search | Examiner |
|---|---|---|
| VIENNA | 10-06-1985 | BURGHARDT |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82